# EUROPEAN PATENT APPLICATION

(11) **EP 4 694 477 A1**
(43) Date of publication of application: **11.02.2026**
(21) Application number: 23929144.6
(22) Date of filing: 27.03.2023
(51) Int. Cl.: H04W 72/21

(54) **INDICATION METHODS, APPARATUSES, DEVICE AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Zimmermann, Tankred Klaus
(86) International application number: PCT/CN2023/084197
(87) International publication number: WO 2024/197543

(57) **Abstract**

Provided in the present disclosure are indication methods, apparatuses, a device and a storage medium. One method comprises: sending indication information to a network device, the indication information being used for indicating the use condition of a TO in a specific time window, and the use condition comprising: used or unused. The present disclosure provides the indication method which is used for a terminal device to indicate the use condition of the TO in the specific time window to the network device, such that when the network device determines, on the basis of the indication of the terminal device, that the TO in the specific time window is not used by the terminal device, the unused TO can be reused for other uplink transmission, thus ensuring uplink transmission efficiency.

## Description

### TECHNICAL FIELD

The present disclosure relates to the field of communication technologies, and in particular relates to an indication method, an indication apparatus, an indication device, and a storage medium.

### BACKGROUND

In a communication system, a network device usually configures a configured grant (CG) period for a terminal, where the CG period may include multiple transmission occasions (TOs), and the terminal may choose to perform an uplink transmission in some or all TOs in the CG period.

### SUMMARY

The present disclosure provides an indication method, an indication apparatus, an indication device, and a storage medium.

In a first aspect, embodiments of the present disclosure provide an indication method, including: sending indication information to a network device, where the indication information indicates a usage of a TO in a specific time window, and the usage includes a used status or an unused status.

In a second aspect, embodiments of the present disclosure provide an indication method, including: receiving indication information sent by a terminal, where the indication information indicates a usage of a TO in a specific time window, and the usage includes a used status or an unused status.

In a third aspect, embodiments of the present disclosure provide a communication device, including: a transceiver module configured to send indication information to a network device, where the indication information indicates a usage of a TO in a specific time window, and the usage includes a used status or an unused status.

In a fourth aspect, embodiments of the present disclosure provide a communication device, including: a transceiver module configured to receive indication information sent by a terminal, where the indication information indicates a usage of a TO in a specific time window, and the usage includes a used status or an unused status.

In a fifth aspect, embodiments of the present disclosure provide a communication device, which includes a processor. When the processor calls a computer program in a memory, the method described above in the first or second aspect is performed.

In a sixth aspect, embodiments of the present disclosure provide a communication device, which includes a processor and a memory having stored therein a computer program. The processor executes the computer program stored in the memory to cause the communication device to perform the method described above in the first or second aspect.

In a seventh aspect, embodiments of the present disclosure provide a communication device, which includes a processor and an interface circuit configured to receive code instructions and transmit the code instructions to the processor. The processor is configured to run the code instructions to cause the communication device to perform the method described above in the first or second aspect.

In an eighth aspect, embodiments of the present disclosure provide a communication system, which includes the communication device described in the third or fourth aspect, or the communication device described in the fifth aspect, or the communication device described in the sixth aspect, or the communication device described in the seventh aspect.

In a ninth aspect, embodiments of the present disclosure provide a computer-readable storage medium for storing instructions used by the above-mentioned network device that, when executed, cause the terminal to perform the method described above in the first or second aspect.

In a tenth aspect, the present disclosure further provides a computer program product including a computer program that, when run on a computer, causes the computer to perform the method described above in the first or second aspect.

In an eleventh aspect, the present disclosure provides a chip system, including at least one processor and an interface for supporting a network device to implement the functions involved in the method described in the first or second aspect, for example, determining or processing at least one of data or information involved in the above method. In a possible design, the chip system further includes a memory, which is configured to store desired computer programs and data for source and secondary nodes. The chip system may be composed of chips, or may include chips and other discrete devices.

In a twelfth aspect, the present disclosure provides a computer program that, when run on a computer, causes the computer to perform the method described above in the first or second aspect.

### BRIEF DESCRIPTION OF THE DRAWINGS

These and/or additional aspects and advantages of the present disclosure will become apparent and more readily appreciated from the following descriptions of the embodiments made with reference to the drawings, in which:
FIG. 1 is a schematic diagram of the architecture of some communication systems provided in an embodiment of the present disclosure;
FIG. 2 is a schematic flowchart of an indication method provided in another embodiment of the present disclosure;
FIG. 3a is a schematic flowchart of an indication method provided in yet another embodiment of the present disclosure;
FIGS. 3b to 3f are schematic diagrams of determining a specific time window based on a start time unit and an end time unit provided in an embodiment of the present disclosure;
FIG. 4 is a schematic flowchart of an indication method provided in yet another embodiment of the present disclosure;
FIG. 5 is a schematic flowchart of an indication method provided in yet another embodiment of the present disclosure;
FIG. 6 is a schematic flowchart of an indication method provided in yet another embodiment of the present disclosure;
FIG. 7 is a schematic flowchart of an indication method provided in yet another embodiment of the present disclosure;
FIG. 8 is a schematic flowchart of an indication method provided in yet another embodiment of the present disclosure;
FIG. 9 is a schematic flowchart of an indication method provided in yet another embodiment of the present disclosure;
FIG. 10 is a schematic flowchart of an indication method provided in yet another embodiment of the present disclosure;
FIG. 11 is a schematic flowchart of an indication method provided in yet another embodiment of the present disclosure;
FIG. 12 is a schematic flowchart of an indication method provided in yet another embodiment of the present disclosure;
FIG. 13 is a schematic flowchart of an indication method provided in yet another embodiment of the present disclosure;
FIG. 14 is a schematic flowchart of an indication method provided in yet another embodiment of the present disclosure;
FIG. 15 is a schematic flowchart of an indication method provided in yet another embodiment of the present disclosure;
FIG. 16 is a schematic flowchart of an indication method provided in yet another embodiment of the present disclosure;
FIG. 17 is a schematic flowchart of an indication method provided in yet another embodiment of the present disclosure;
FIG. 18 is a schematic flowchart of an indication method provided in yet another embodiment of the present disclosure;
FIG. 19 is a schematic flowchart of an indication method provided in yet another embodiment of the present disclosure;
FIG. 20 is a schematic block diagram of a communication device provided in an embodiment of the present disclosure;
FIG. 21 is a schematic block diagram of a communication device provided in an embodiment of the present disclosure;
FIG. 22 is a block diagram of a communication device provided in an embodiment of the present disclosure;
FIG. 23 is a schematic block diagram of a chip provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the embodiments of the present disclosure. Instead, they are merely examples of apparatuses and methods consistent with some aspects of the embodiments of the disclosure as recited in the appended claims.

Terms used herein in the embodiments of the present disclosure are only for the purpose of describing specific embodiments, but should not be construed to limit the embodiments of the present disclosure. As used in the embodiments of the present disclosure and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the term "if" or "in a case where" may be construed to mean "when" or "upon" or "in response to determining" depending on the context.

Reference will be made in detail to the embodiments of the present disclosure, examples of which are shown in the drawings. The same or similar elements are denoted by the same or similar reference numerals throughout the descriptions. The embodiments described herein with reference to the drawings are illustrative, and used to explain the present disclosure. The embodiments shall not be construed to limit the present disclosure.

In the related technology, when there is a TO that is not used by a terminal in a CG period, a network device can schedule the TO that is not used by the terminal to be reused by other terminals for uplink transmissions, thereby improving the uplink transmission efficiency. Therefore, the terminal needs to indicate the usage of the TO in the CG period to the network device, so that the network device can schedule the unused TO for reuse based on the usage of the TO in the CG period.

In the related technology, the method for the terminal to indicate the usage of the TO in the CG period to the network device may include sending, by the terminal, indication information to the network device, where the indication information indicates at least one continuous unused TO; or the indication information may indicate a continuous time window, and all TOs in the time window are unused TOs.

However, in the above method, when the usage of the TO in the time window is indicated, the method for determining the start position of the time window is not yet clear.

In order to better understand an indication method disclosed in an embodiment of the present disclosure, the communication system to which the embodiments of the present disclosure is applicable is first described below.

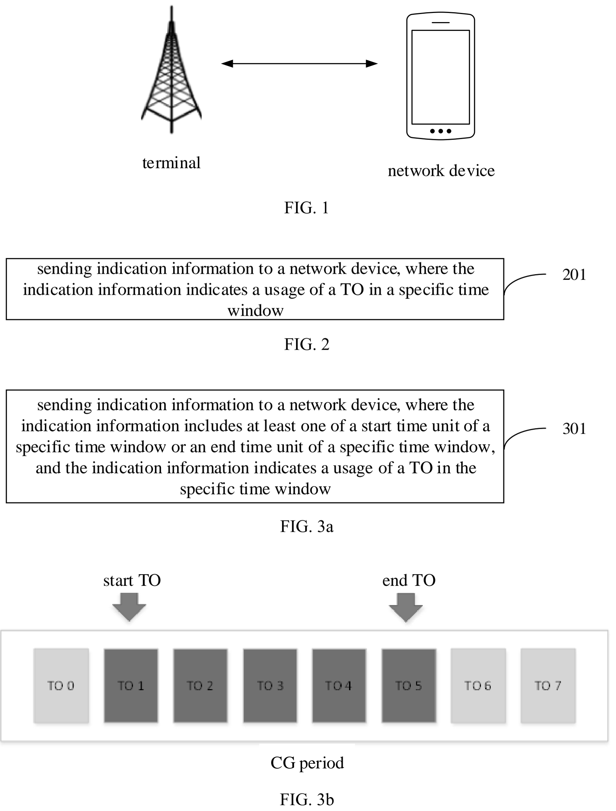

Reference is made to FIG. 1, which is a schematic diagram of the architecture of a communication system provided in an embodiment of the present disclosure. The communication system may include, but is not limited to, at least one terminal and at least one network device. Moreover, the number and form of devices shown in FIG. 1 are used as examples only, but do not constitute a limitation on the embodiments of the present disclosure. In applications, one or more terminals or one or more network devices may be included. Optionally, the communication system shown in FIG. 1 includes one terminal and one network device as an example.

It should be noted that the technical solution in this embodiment of the present disclosure may be applied to various communication systems, such as a long term evolution (LTE) system, a 5th generation (5G) mobile communication system, a 5G new radio (NR) system, or other new future mobile communication systems.

The network device in the embodiments of the present disclosure may be an entity on the network side for transmitting or receiving signals. For example, the network device may be an evolved NodeB (eNB), a transmission reception point (TRP), a radio remote head (RRH), a next generation NodeB (gNB) in an NR system, a base station in other future mobile communication systems, an access node in a wireless fidelity (Wi-Fi) system, or the like. The specific technology and specific device form adopted by the base station are not limited in the embodiments of the present disclosure. The base station provided in the embodiments of the present disclosure may be composed of a centralized unit (CU) and a distributed unit (DU), in which the CU may also be referred to as a control unit. The CU-DU structure may be used to split the protocol layer of the network device, such as the base station, and the functions of some protocol layers are placed in the CU for centralized control, and the functions of some or all of the remaining protocol layers are distributed in the DU, and the DU is centrally controlled by the CU.

The terminal in the embodiments of the present disclosure may be an entity on the user side for receiving or transmitting signals, such as a mobile phone. The terminal may also be called a terminal device, a user equipment (UE), a mobile station (MS), a mobile terminal (MT), or the like. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in a smart home, or the like. The specific technology and specific device form adopted by the terminal are not limited in the embodiments of the present disclosure.

It may be understood that the communication system described in this embodiment of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new business scenarios, the technical solution provided in this embodiment of the present disclosure is also applicable to similar technical problems.

In addition, in order to facilitate the understanding of the embodiments of the present disclosure, the following points are explained.

First, in the present disclosure, unless there is any contradiction, each step in any implementation or embodiment can be implemented as an independent embodiment, and the steps can be arbitrarily combined. For example, a solution after removing some steps in a certain implementation or embodiment can also be implemented as an independent embodiment, and the order of steps in a certain implementation or embodiment can be arbitrarily exchanged. In addition, the optional methods or optional examples in a certain implementation or embodiment can be arbitrarily combined. Moreover, the various implementations or embodiments can be arbitrarily combined. For example, some or all steps of different implementations or embodiments can be arbitrarily combined, and a certain implementation or embodiment can be arbitrarily combined with the optional methods or optional examples of other implementations or embodiments.

Second, regarding the description of the present disclosure such as "A or B", "A and/or B", "at least one of A or B", "A in a case, B in another case", "in response to a case A, in response to another case B", or the like, at least one of the following schemes may be included according to the situations: executing A independently of B, that is, A in some embodiments; executing B independently of A, that is, B in some embodiments; selectively executing A and B, that is, selecting from A and B for execution in some embodiments; or executing both A and B, that is, A and B in some embodiments.

Third, each element, each row, or each column in a table involved in the present disclosure can be implemented as an independent embodiment, and the combination of any elements, any rows, or any columns can also be implemented as an independent embodiment.

Fourth, in some embodiments or examples, "including A", "containing A", "indicating A" and "carrying A" in the present disclosure can be interpreted as directly carrying A or indirectly indicating A.

Fifth, in some embodiments or examples, "in response to...", "in the case of...", "at the time of...", "when...", "if...", "in a case where...", and the like in the present disclosure can be replaced with each other.

FIG. 2 is a schematic flowchart of an indication method provided in an embodiment of the present disclosure. The method is performed by a terminal. As shown in FIG. 2, the indication method may include the following step.

At step 201, indication information is sent to a network device, where the indication information indicates a usage of a TO in a specific time window, and the usage may include a used status or an unused status.

In an embodiment of the present disclosure, the terminal may send the indication information to the network device in response to a CG period including multiple TOs, where the indication information indicates a usage of a TO in a specific time window, and the usage may include a used status or an unused status. Alternatively, when a CG period includes multiple TOs, the terminal may send the indication information to the network device, where the indication information indicates a usage of a TO in a specific time window, and the usage may include a used status or an unused status.

In an embodiment of the present disclosure, the above-mentioned CG period may be configured by the network device, for example, may be configured by the network device via a radio resource control (RRC) signaling.

In an embodiment of the present disclosure, the network device may configure at least one CG period for the terminal. After the terminal receives the CG period configured by the network device, the terminal may select a TO to be used by the terminal from all TOs in the CG period. Optionally, the terminal can select at least some of the TOs in the CG period as "used TOs", and the remaining TOs (i.e., TOs other than "used TOs selected by the terminal" in at least one CG period configured by the network device) are considered to be "unused TOs" by the terminal. Optionally, for the "used TO" selected by the terminal, the terminal may selectively actually use the TO, for example, may use the TO for an uplink transmission, or may not use the TO, for example, may not use the TO for an uplink transmission. For the "unused TO" selected by the terminal, the terminal may not use the TO, for example, may not use the TO for an uplink transmission. In an embodiment of the present disclosure, after the terminal determines the TO to be used, the terminal can further determine the usage of the TO in the specific time window and send indication information to the network device to indicate the usage of the TO in the specific time window. Optionally, the specific time window may be located in a valid time window of the indication information or be equal to a valid time window of the indication information. Optionally, the valid time window of the indication information may be a time window composed of all TOs whose usage can be indicated by the indication information. Optionally, the valid time window of the indication information may be predefined by a protocol, or the valid time window of the indication information may be configured by the network device for the terminal.

As can be seen from the above content, the terminal can send the indication information to the network device based on the usage of the TO in the specific time window to indicate to the network device whether the usage of the TO in the specific time window is a used status or an unused status. The indication information may, for example, indicate that the TO in the specific time window is an unused TO, or the indication information may, for example, indicate that the TO in the specific time window is a used TO. Thus, the network device can determine whether the TO in the specific time window is an unused TO based on the indication information from the terminal. When the network device determines that the TO in the specific time window is an unused TO, the network device may schedule the TO in the specific time window to be reused for other uplink transmissions, thereby improving the uplink transmission efficiency.

In an embodiment of the present disclosure, the indication information may be sent to the network device in any one or several TOs (e.g., the used TOs) via an uplink control information (UCI) signaling. Optionally, the UCI may be a CG-UCI or a new UCI, and the UCI may be carried by a CG physical uplink shared channel (PUSCH).

In addition, it should be noted that the time window in the present disclosure is only an illustrative name in the present disclosure, and the time window can also be called a time range, or a time duration, or the like. It should be understood that other terms similar to "time window", "time range", or "time duration" are also within the protection scope of the present disclosure.

In summary, in the indication method provided in the embodiments of the present disclosure, the terminal sends the indication information to the network device, where the indication information indicates the usage of the TO in the specific time window, and the usage includes a used status or an unused status. It can be seen that the present disclosure provides an indication method for the terminal to indicate to the network device the usage of the TO in the specific time window, so that after the network device determines based on the indication from the terminal that TOs in the specific time window are not used by the terminal, these unused TOs can be reused for other uplink transmissions, thereby ensuring the uplink transmission efficiency.

FIG. 3a is a schematic flowchart of an indication method provided in an embodiment of the present disclosure. The method is performed by a terminal. As shown in FIG. 3a, the indication method may include the following step.

At step 301, indication information is sent to a network device, where the indication information includes at least one of a start time unit of a specific time window or an end time unit of a specific time window, and the indication information indicates a usage of a TO in the specific time window.

In an embodiment of the present disclosure, the terminal may send the indication information to the network device in response to a CG period including multiple TOs.

In an embodiment of the present disclosure, the indication information indicates the usage of the TO in the specific time window, and the indication information may also carry at least one of the start time unit of the specific time window or the end time unit of the specific time window. The time unit may include at least one of a time slot (SLOT), a TO, or a radio subframe. Furthermore, after receiving the indication information, the network device can determine a specific time window based on at least one of the start time unit or the end time unit included in the indication information, and then determine the usage of the TO in the specific time window based on the indication meaning of the indication information (that is, whether the indication information indicates a used TO or an unused TO), so as to further confirm whether to reuse the TO in the specific time window based on the usage of the TO in the specific time window.

In an embodiment of the present disclosure, when the indication meaning of the indication information is indicating an unused TO, then after the network device receives the indication information and determines a specific time window based on the start time unit and/or the end time unit included in the indication information, the network device can directly determine that the TO in the specific time window is an unused TO. In another embodiment of the present disclosure, when the indication meaning of the indication information is indicating a used TO, then after the network device receives the indication information and determines a specific time window based on the start time unit and/or the end time unit included in the indication information, the network device can directly determine that the TO in the specific time window is a used TO.

In an embodiment of the present disclosure, the above-mentioned "indication information including at least one of the start time unit of the specific time window or the end time unit of the specific time window" can be embodied in any of the following situations.

Situation 1, the indication information includes the start time unit and the end time unit of the specific time window.

Optionally, when the indication information includes the start time unit and the end time unit of the specific time window, after the network device receives the indication information, the network device can determine the specific time window based on the start time unit and the end time unit included in the indication information, and further determine the usage of the TO in the specific time window based on the indication meaning of the indication information (that is, whether the indication information indicates a used TO or an unused TO).

In an embodiment of the present disclosure, taking the time unit as a TO as an example, FIG. 3b is a schematic diagram of determining a specific time window based on a start time unit and an end time unit provided in an embodiment of the present disclosure. As shown in FIG. 3b, assuming that the start time unit included in the indication information is TO1 and the end time unit included in the indication information is TO5, then the specific time window includes TO1, TO2, TO3, TO4, and TO5. At this time, the indication information indicates whether the usage of each of TO1, TO2, TO3, TO4, and TO5 is a used status or an unused status.

In another embodiment of the present disclosure, taking the time unit as an SLOT as an example, assuming that the start time unit included in the indication information is SLOT1 and the end time unit included in the indication information is SLOTS, then the specific time window includes SLOT1, SLOT2, SLOT3, SLOT4, and SLOT5. At this time, the indication information indicates whether the usage of a TO in each of SLOT1, SLOT2, SLOT3, SLOT4, and SLOT5 is a used status or an unused status.

Situation 2, the indication information includes the start time unit of the specific time window.

Optionally, in an embodiment of the present disclosure, when the end time unit has been predefined by a protocol and/or has been configured by the network device for the terminal, the indication information may only include the start time unit. Furthermore, after the network device receives the indication information, the network device can determine the end time unit based on the protocol predefinition, and determine the specific time window in combination with the start time unit included in the indication information, or the network device can determine the specific time window based on the end time unit configured by the network device for the terminal in combination with the start time unit in the indication information, and further determine the usage of the TO in the specific time window based on the indication meaning of the indication information (that is, whether the indication information indicates a used TO or an unused TO).

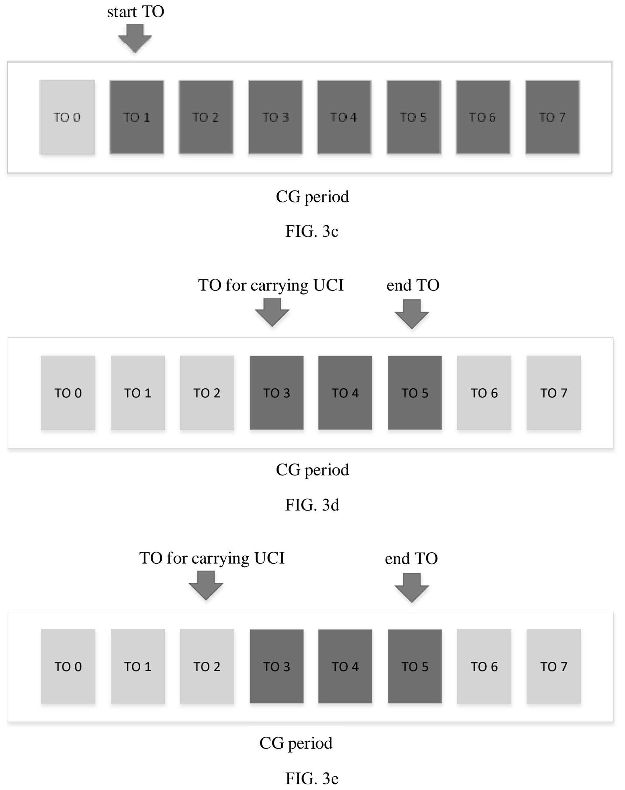

In an embodiment of the present disclosure, taking the time unit as a TO as an example, FIG. 3c is a schematic diagram of determining a specific time window based on a start time unit and an end time unit provided in an embodiment of the present disclosure. For example, as shown in FIG. 3c, it is assumed that the start time unit included in the indication information is TO1, and the end time unit predefined by a protocol and/or configured by the network device is the last TO in a CG period where a CG PUSCH carrying the indication information is located. If the TOs in the CG period where the CG PUSCH carrying the indication information is located include TO0, TO1, TO2, TO3, TO4, TO5, TO6, and TO7, respectively, then it can be determined that the specific time window includes TO1, TO2, TO3, TO4, TO5, TO6, and TO7. At this time, the indication information indicates whether the usage of each of TO1, TO2, TO3, TO4, TO5, TO6, and TO7 is a used status or an unused status.

In another embodiment of the present disclosure, taking the time unit as an SLOT as an example, it is assumed that the start time unit included in the indication information is SLOT3, and the end time unit predefined by a protocol and/or configured by the network device is the last SLOT in a CG period where a CG PUSCH carrying the indication information is located. The TOs in the CG period where the CG PUSCH carrying the indication information is located include SLOT0, SLOT1, SLOT2, SLOT3, SLOT4, SLOTS, SLOT6, and SLOT7, respectively. Then, it can be determined that the specific time window includes SLOT3, SLOT4, SLOTS, SLOT6, and SLOT7. At this time, the indication information indicates whether the usage of a TO in each of SLOT3, SLOT4, SLOTS, SLOT6, and SLOT7 is a used status or an unused status.

Situation 3, the indication information includes the end time unit of the specific time window.

Optionally, in an embodiment of the present disclosure, when the start time unit has been predefined by a protocol and/or has been configured by the network device for the terminal, the indication information may only include the end time unit. Furthermore, after the network device receives the indication information, the network device can determine the start time unit based on the protocol predefinition, and determine the specific time window in combination with the end time unit included in the indication information, or the network device can determine the specific time window based on the start time unit configured by the network device for the terminal in combination with the end time unit in the indication information, and further determine the usage of the TO in the specific time window based on the indication meaning of the indication information (that is, whether the indication information indicates a used TO or an unused TO).

In an embodiment of the present disclosure, taking the time unit as a TO as an example, FIGS. 3d to 3f are schematic diagrams of determining a specific time window based on a start time unit and an end time unit provided in an embodiment of the present disclosure.

For example, as shown in FIG. 3d, it is assumed that the end time unit included in the indication information is TO5, and the start time unit predefined by a protocol and/or configured by the network device is a TO for a CG PUSCH carrying the indication information (i.e., a TO for carrying the UCI in FIG. 3d). If the TO for the CG PUSCH carrying the indication information is TO3, then it can be determined that the specific time window includes TO3, TO4, and TO5. At this time, the indication information indicates whether the usage of each of TO3, TO4, and TO5 is a used status or an unused status.

For another example, as shown in FIG. 3e, it is assumed that the end time unit included in the indication information is TO5, and the start time unit predefined by a protocol and/or configured by the network device is a next TO of a TO for a CG PUSCH carrying the indication information. If the TO for the CG PUSCH carrying the indication information is TO2, then it can be determined that the specific time window includes TO3, TO4, and TO5. At this time, the indication information indicates whether the usage of each of TO3, TO4, and TO5 is a used status or an unused status.

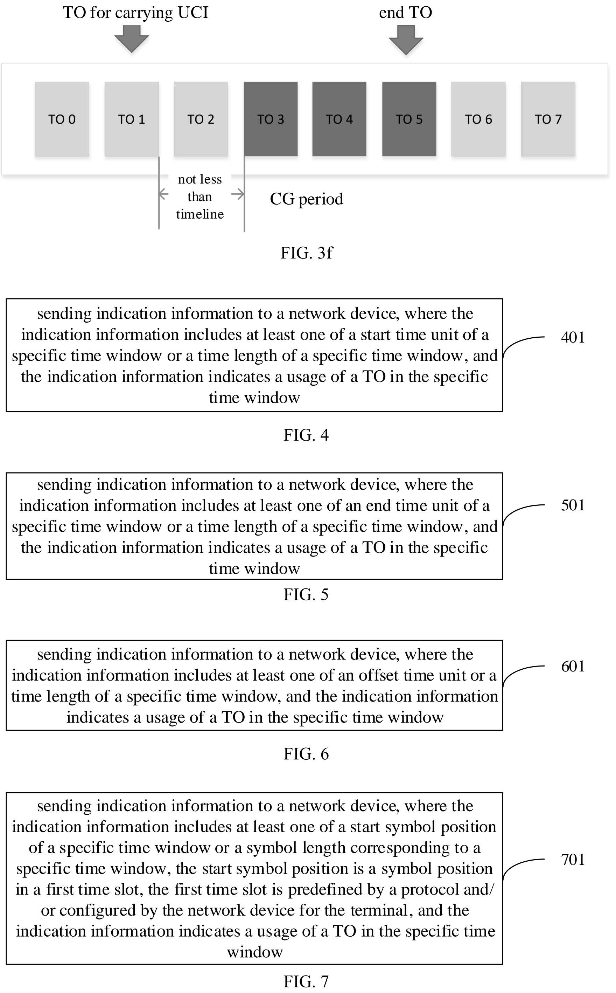

For another example, as shown in FIG. 3f, it is assumed that the end time unit included in the indication information is TO5, the start time unit predefined by a protocol and/or configured by the network device is a target TO, and the time interval between the target TO and a TO for a CG PUSCH carrying the indication information satisfies a preset duration (for example, the time interval between the start time of the target TO and the end time of the TO for the CG PUSCH carrying the indication information satisfies the preset duration, and the timeline shown in FIG. 3f is the preset duration). If the TO for the CG PUSCH carrying the indication information is TO1 and the target TO is TO3, then it can be determined that the specific time window includes TO3, TO4, and TO5. At this time, the indication information indicates whether the usage of each of TO3, TO4, and TO5 is a used status or an unused status.

It should be noted that the above-mentioned preset duration may be predefined by a protocol, or may be configured by the network device for the terminal, or may be reported by the terminal to the network device.

In yet another embodiment of the present disclosure, the time unit as an SLOT is taken as an example. For example, assuming that the end time unit included in the indication information is SLOT6, and the start time unit predefined by a protocol and/or configured by the network device is an SLOT for a CG PUSCH carrying the indication information, if the SLOT for the CG PUSCH carrying the indication information is SLOT3, then it can be determined that the specific time window includes SLOT3, SLOT4, SLOTS, and SLOT6. At this time, the indication information indicates whether the usage of a TO in each of SLOT3, SLOT4, SLOTS, and SLOT6 is a used status or an unused status.

For another example, assuming that the end time unit included in the indication information is SLOT6, and the start time unit predefined by a protocol and/or configured by the network device is a next SLOT of an SLOT for a CG PUSCH carrying the indication information, if the SLOT for the CG PUSCH carrying the indication information is SLOT3, then it can be determined that the specific time window includes SLOT4, SLOTS, and SLOT6. At this time, the indication information indicates whether the usage of a TO in each of SLOT4, SLOTS, and SLOT6 is a used status or an unused status.

For another example, it is assumed that the end time unit included in the indication information is SLOT6, the start time unit predefined by a protocol and/or configured by the network device is a target SLOT, and the time interval between the target SLOT and an SLOT for a CG PUSCH carrying the indication information satisfies a preset duration (for example, the time interval between the start time of the target SLOT and the end time of the SLOT for the CG PUSCH carrying the indication information satisfies the preset duration). If the SLOT for the CG PUSCH carrying the indication information is SLOT3 and the target SLOT is SLOTS, it can be determined that the specific time window includes SLOTS, and SLOT6. At this time, the indication information indicates whether the usage of a TO in each of SLOTS and SLOT6 is a used status or an unused status.

As can be seen from the above content, by including at least one of the start time unit of the specific time window or the end time unit of the specific time window in the indication information, the specific time window can be determined based on the indication information. On this basis, the usage of the TO in the specific time window can be further determined based on the indication meaning of the indication information (that is, whether the indication information indicates a used TO or an unused TO).

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

FIG. 4 is a schematic flowchart of an indication method provided in an embodiment of the present disclosure. The method is performed by a terminal. As shown in FIG. 4, the indication method may include the following step.

At step 401, indication information is sent to a network device, where the indication information includes at least one of a start time unit of a specific time window or a time length of a specific time window, and the indication information indicates a usage of a TO in the specific time window.

In an embodiment of the present disclosure, the terminal may send the indication information to the network device in response to a CG period including multiple TOs.

In an embodiment of the present disclosure, the indication information indicates the usage of the TO in the specific time window, and the indication information may also carry at least one of the start time unit or the time length of the specific time window. The time unit may include at least one of an SLOT, a TO, or a radio subframe. Furthermore, after receiving the indication information, the network device can determine the specific time window based on at least one of the start time unit or the time length of the specific time window included in the indication information, and then determine the usage of the TO in the specific time window based on the indication meaning of the indication information (that is, whether the indication information indicates a used TO or an unused TO), so as to further confirm whether to reuse the TO in the specific time window based on the usage of the TO in the specific time window.

In an embodiment of the present disclosure, when the indication meaning of the indication information is indicating an unused TO, then after the network device receives the indication information and determines the specific time window based on the start time unit and/or the time length of the specific time window included in the indication information, the network device can directly determine that the TO in the specific time window is an unused TO. In another embodiment of the present disclosure, when the indication meaning of the indication information is indicating a used TO, then after the network device receives the indication information and determines the specific time window based on the start time unit and/or the time length of the specific time window included in the indication information, the network device can directly determine that the TO in the specific time window is a used TO.

In an embodiment of the present disclosure, the above-mentioned "indication information including at least one of the start time unit of the specific time window or the time length of the specific time window" can be embodied in any of the following situations.

Situation 1, the indication information includes the start time unit of the specific time window and the time length of the specific time window.

When the indication information includes the start time unit of the specific time window and the time length of the specific time window, after the network device receives the indication information, the network device can determine the specific time window based on the start time unit and the time length of the specific time window included in the indication information, and further determine the usage of the TO in the specific time window based on the indication meaning of the indication information (that is, whether the indication information indicates a used TO or an unused TO).

In an embodiment of the present disclosure, taking the time unit as a TO as an example, assuming that the start time unit included in the indication information is TO1 and the time length of the specific time window is 5 TOs, then the specific time window includes TO1, TO2, TO3, TO4, and TO5. At this time, the indication information indicates whether the usage of each of TO1, TO2, TO3, TO4, and TO5 is a used status or an unused status.

In another embodiment of the present disclosure, taking the time unit as an SLOT as an example, assuming that the start time unit included in the indication information is SLOT1 and the time length of the specific time window is 5 SLOTs, then the specific time window includes SLOT1, SLOT2, SLOT3, SLOT4, and SLOTS. At this time, the indication information indicates whether the usage of a TO in each of SLOT1, SLOT2, SLOT3, SLOT4, and SLOT5 is a used status or an unused status.

Situation 2, the indication information includes the start time unit of the specific time window.

In an embodiment of the present disclosure, when the time length of the specific time window has been predefined by a protocol and/or has been configured by the network device for the terminal, the indication information may only include the start time unit. Furthermore, after the network device receives the indication information, the network device can determine the time length of the specific time window based on the protocol predefinition, and determine the specific time window in combination with the start time unit included in the indication information, or the network device can determine the specific time window based on the time length of the specific time window configured by the network device for the terminal in combination with the start time unit in the indication information, and further determine the usage of the TO in the specific time window based on the indication meaning of the indication information (that is, whether the indication information indicates a used TO or an unused TO).

In an embodiment of the present disclosure, taking the time unit as a TO as an example, assuming that the start time unit included in the indication information is TO1, and the time length of the specific time window predefined by a protocol and/or configured by the network device is 5 TOs, then it can be determined that the specific time window includes TO1, TO2, TO3, TO4, and TO5. At this time, the indication information indicates whether the usage of each of TO1, TO2, TO3, TO4, and TO5 is a used status or an unused status.

For example, in another embodiment of the present disclosure, taking the time unit as an SLOT as an example, assuming that the start time unit included in the indication information is SLOT3, and the time length of the specific time window predefined by a protocol and/or configured by the network device is 5 SLOTs, then it can be determined that the specific time window includes SLOT3, SLOT4, SLOTS, SLOT6, and SLOT7. At this time, the indication information indicates whether the usage of a TO in each of SLOT3, SLOT4, SLOTS, SLOT6, and SLOT7 is a used status or an unused status.

Situation 3, the indication information includes the time length of the specific time window.

In an embodiment of the present disclosure, when the start time unit has been predefined by a protocol and/or has been configured by the network device for the terminal, the indication information may only include the time length of the specific time window. Furthermore, after the network device receives the indication information, the network device can determine the start time unit based on the protocol predefinition, and determine the specific time window in combination with the time length of the specific time window included in the indication information, or the network device can determine the specific time window based on the start time unit configured by the network device for the terminal in combination with the time length of the specific time window in the indication information, and further determine the usage of the TO in the specific time window based on the indication meaning of the indication information (that is, whether the indication information indicates a used TO or an unused TO).

In an embodiment of the present disclosure, taking the time unit as a TO as an example, for example, assuming that the time length of the specific time window included in the indication information is 4 TOs, and the start time unit predefined by a protocol and/or configured by the network device is a TO for a CG PUSCH carrying the indication information, if the TO for the CG PUSCH carrying the indication information is TO3, then it can be determined that the specific time window includes TO3, TO4, TO5, and TO6. At this time, the indication information indicates whether the usage of each of TO3, TO4, TO5, and TO6 is a used status or an unused status.

For another example, assuming that the time length of the specific time window included in the indication information is 3 TOs, and the start time unit predefined by a protocol and/or configured by the network device is a next TO of a TO for a CG PUSCH carrying the indication information, if the TO for the CG PUSCH carrying the indication information is TO3, then it can be determined that the specific time window includes TO4, TO5, and TO6. At this time, the indication information indicates whether the usage of each of TO4, TO5, and TO6 is a used status or an unused status.

For another example, it is assumed that the time length of the specific time window included in the indication information is 3 TOs, the start time unit predefined by a protocol and/or configured by the network device is a target TO, and the time interval between the target TO and a TO for a CG PUSCH carrying the indication information satisfies a preset duration (for example, the time interval between the start time of the target TO and the end time of the TO for the CG PUSCH carrying the indication information satisfies the preset duration). If the TO for the CG PUSCH carrying the indication information is TO3 and the target TO is TO5, then it can be determined that the specific time window includes TO5, TO6, and TO7. At this time, the indication information indicates whether the usage of each of TO5, TO6, and TO7 is a used status or an unused status.

It should be noted that the above-mentioned preset duration may be predefined by a protocol, or may be configured by the network device for the terminal, or may be reported by the terminal to the network device.

In an embodiment of the present disclosure, taking the time unit as an SLOT as an example, for example, assuming that the time length of the specific time window included in the indication information is 4 SLOTs, and the start time unit predefined by a protocol and/or configured by the network device is an SLOT for a CG PUSCH carrying the indication information, if the SLOT for the CG PUSCH carrying the indication information is SLOT3, then it can be determined that the specific time window includes SLOT3, SLOT4, SLOTS, and SLOT6. At this time, the indication information indicates whether the usage of a TO in each of SLOT3, SLOT4, SLOTS, and SLOT6 is a used status or an unused status.

For another example, assuming that the time length of the specific time window included in the indication information is 3 SLOTs, and the start time unit predefined by a protocol and/or configured by the network device is a next SLOT of an SLOT for a CG PUSCH carrying the indication information, if the SLOT for the CG PUSCH carrying the indication information is SLOT3, then it can be determined that the specific time window includes SLOT4, SLOTS, and SLOT6. At this time, the indication information indicates whether the usage of a TO in each of SLOT4, SLOTS, and SLOT6 is a used status or an unused status.

For another example, it is assumed that the time length of the specific time window included in the indication information is 3 SLOTs, the start time unit predefined by a protocol and/or configured by the network device is a target SLOT, and the time interval between the target SLOT and an SLOT for a CG PUSCH carrying the indication information satisfies a preset duration (for example, the time interval between the start time of the target SLOT and the end time of the SLOT for the CG PUSCH carrying the indication information satisfies the preset duration). If the SLOT for the CG PUSCH carrying the indication information is SLOT3 and the target SLOT is SLOTS, then it can be determined that the specific time window includes SLOTS, SLOT6, and SLOT7. At this time, the indication information indicates whether the usage of the TO in each of SLOTS, SLOT6, and SLOT7 is a used status or an unused status.

As can be seen from the above content, by including at least one of the start time unit of the specific time window or the time length of the specific time window in the indication information, the specific time window can be determined based on the indication information. On this basis, the usage of the TO in the specific time window can be further determined based on the indication meaning of the indication information (that is, whether the indication information indicates a used TO or an unused TO).

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

FIG. 5 is a schematic flowchart of an indication method provided in an embodiment of the present disclosure. The method is performed by a terminal. As shown in FIG. 5, the indication method may include the following step.

At step 501, indication information is sent to a network device, where the indication information includes at least one of an end time unit of a specific time window or a time length of a specific time window, and the indication information indicates a usage of a TO in the specific time window.

In an embodiment of the present disclosure, the terminal may send the indication information to the network device in response to a CG period including multiple TOs.

For the detailed description of step 501, reference may be made to the description of the aforementioned embodiments.

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

FIG. 6 is a schematic flowchart of an indication method provided in an embodiment of the present disclosure. The method is performed by a terminal. As shown in FIG. 6, the indication method may include the following step.

At step 601, indication information is sent to a network device, where the indication information includes at least one of an offset time unit or a time length of a specific time window, and the indication information indicates a usage of a TO in the specific time window.

In an embodiment of the present disclosure, the terminal may send the indication information to the network device in response to a CG period including multiple TOs.

In an embodiment of the present disclosure, the offset time unit is used to determine a start time unit or an end time unit of the specific time window in combination with a reference time unit. For example, the start time unit or the end time unit of the specific time window may be equal to the sum of the reference time unit and the offset time unit. For example, if the offset time unit is one TO and the reference time unit is TO1, the determined start time unit or the determined end time unit may be TO2. Moreover, after the start time unit or the end time unit of the specific time window is determined, the specific time window may be determined based on the start time unit or the end time unit of the specific time window in combination with the time length of the specific time window.

In an embodiment of the present disclosure, the above-mentioned reference time unit may be predefined by a protocol and/or configured by the network device for the terminal.

In an embodiment of the present disclosure, the reference time unit may be any one of: the reference time unit being a time unit where a CG PUSCH carrying the indication information is located; the reference time unit being a next time unit of a time unit where a CG PUSCH carrying the indication information is located; or the reference time unit being a target time unit, where the time interval between the target time unit and a time unit for a CG PUSCH carrying the indication information satisfies a preset duration (for example, the time interval between the start time of the target time unit and the end time of the time unit for the CG PUSCH carrying the indication information satisfies the preset duration).

For example, taking the time unit as a TO as an example, the reference time unit can be any one of: the reference TO being a TO where a CG PUSCH carrying the indication information is located; the reference TO being a next TO of a TO where a CG PUSCH carrying the indication information is located; or the reference TO being a target TO, where the time interval between the target TO and a TO for a CG PUSCH carrying the indication information satisfies a preset duration (for example, the time interval between the start time of the target TO and the end time of the TO for the CG PUSCH carrying the indication information satisfies the preset duration).

For example, taking the time unit as an SLOT as an example, the reference time unit can be any one of: the reference SLOT being an SLOT where a CG PUSCH carrying the indication information is located; the reference SLOT being a next SLOT of an SLOT where a CG PUSCH carrying the indication information is located; or the reference SLOT being a target SLOT, where the time interval between the target SLOT and an SLOT for a CG PUSCH carrying the indication information satisfies a preset duration (for example, the time interval between the start time of the target SLOT and the end time of the SLOT for the CG PUSCH carrying the indication information satisfies the preset duration).

In an embodiment of the present disclosure, the above-mentioned "indication information including at least one of the offset time unit or the time length of the specific time window" may be embodied in any of the following situations.

Situation 1, the indication information includes the offset time unit and the time length of the specific time window.

Optionally, when the indication information includes the offset time unit and the time length of the specific time window, after receiving the indication information, the network device can first determine the reference time unit based on the protocol predefinition, and determine the specific time window in combination with the offset time unit and the time length of the specific time window included in the indication information; or the network device can determine the specific time window based on the reference time unit configured by the network device for the terminal in combination with the offset time unit and the time length of the specific time window included in the indication information, and further determine the usage of the TO in the specific time window based on the indication meaning of the indication information (that is, whether the indication information indicates a used TO or an unused TO).

Situation 2, the indication information includes the time length of the specific time window.

In an embodiment of the present disclosure, when the offset time unit has been predefined by a protocol and/or has been configured by the network device for the terminal, the indication information may only include the time length of the specific time window. Furthermore, after the network device receives the indication information, the network device can determine the offset time unit and the reference time unit based on the protocol predefinition, and determine the specific time window in combination with the time length of the specific time window included in the indication information; or the network device can determine the specific time window based on the offset time unit and the reference time unit configured by the network device for the terminal in combination with the time length of the specific time window in the indication information, and further determine the usage of the TO in the specific time window based on the indication meaning of the indication information (that is, whether the indication information indicates a used TO or an unused TO).

Situation 3, the indication information includes the offset time unit.

In an embodiment of the present disclosure, when the time length of the specific time window has been predefined by a protocol and/or has been configured by the network device for the terminal, the indication information may only include the offset time unit. Furthermore, after the network device receives the indication information, the network device can determine the time length of the specific time window and the reference time unit based on the protocol predefinition, and determine the specific time window in combination with the offset time unit included in the indication information; or the network device can determine the specific time window based on the time length of the specific time window and the reference time unit configured by the network device for the terminal in combination with the offset time unit in the indication information, and further determine the usage of the TO in the specific time window based on the indication meaning of the indication information (that is, whether the indication information indicates a used TO or an unused TO).

As can be seen from the above content, by including at least one of the offset time unit of the specific time window or the time length of the specific time window in the indication information, the specific time window can be determined based on the indication information. On this basis, the usage of the TO in the specific time window can be further determined based on the indication meaning of the indication information (that is, whether the indication information indicates a used TO or an unused TO).

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

FIG. 7 is a schematic flowchart of an indication method provided in an embodiment of the present disclosure. The method is performed by a terminal. As shown in FIG. 7, the indication method may include the following step.

At step 701, indication information is sent to a network device, where the indication information includes at least one of a start symbol position of a specific time window or a symbol length corresponding to a specific time window, the start symbol position is a symbol position in a first time slot, the first time slot is predefined by a protocol and/or configured by the network device for the terminal, and the indication information indicates a usage of a TO in the specific time window.

In an embodiment of the present disclosure, the terminal may send the indication information to the network device in response to a CG period including multiple TOs.

In an embodiment of the present disclosure, the indication information includes the start symbol position and the symbol length corresponding to the specific time window; or the indication information includes the symbol length corresponding to the specific time window in response to the start symbol position being predefined by a protocol and/or configured by the network device for the terminal; or the indication information includes the start symbol position in response to the symbol length corresponding to the specific time window being predefined by a protocol and/or configured by the network device for the terminal. The above-mentioned specific situation of "the indication information including at least one of the start symbol position of the specific time window or the symbol length corresponding to the specific time window" is similar to the above-mentioned specific situation of "the indication information including at least one of the start time unit of the specific time window or the time length of the specific time window", which will not be repeated here in the present disclosure.

In an embodiment of the present disclosure, the first time slot may be any one of: the first time slot being a time slot where a CG PUSCH carrying the indication information is located; the first time slot being a next time slot of a time slot where a CG PUSCH carrying the indication information is located; the first time slot being a target time slot, where the time interval between the target time slot and a time slot for a CG PUSCH carrying the indication information satisfies a preset duration (for example, the time interval between the start time of the target time slot and the end time of the time slot for the CG PUSCH carrying the indication information satisfies the preset duration); or the first time slot being a time slot determined based on a reference time slot and an offset time slot, where the reference time slot may be, for example, a time slot where a CG PUSCH carrying the indication information is located, and the offset time slot may be predefined by a protocol and/or preconfigured by the network device, for example, if the reference time slot is SLOT1 and the offset time slot is 1 SLOT, then the first time slot may be SLOT2.

In an embodiment of the present disclosure, the above-mentioned start symbol position and the above-mentioned first time slot can be used to determine the start position of the specific time window. For example, the start position of the specific time window can be a position corresponding to the start symbol position in the first time slot. For example, assuming that the first time slot is a time slot where a CG PUSCH carrying the indication information is located, and the start symbol position is the second symbol, then it can be determined that the start position of the specific time window is the second symbol in the time slot where the CG PUSCH carrying the indication information is located. Thereafter, the specific time window can be determined based on the start position of the specific time window and the symbol length corresponding to the specific time window.

It can be seen that by including at least one of the start symbol position of the specific time window or the symbol length corresponding to the specific time window in the indication information, the specific time window can be determined based on the indication information. On this basis, the usage of the TO in the specific time window can be further determined based on the indication meaning of the indication information (that is, whether the indication information indicates a used TO or an unused TO).

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

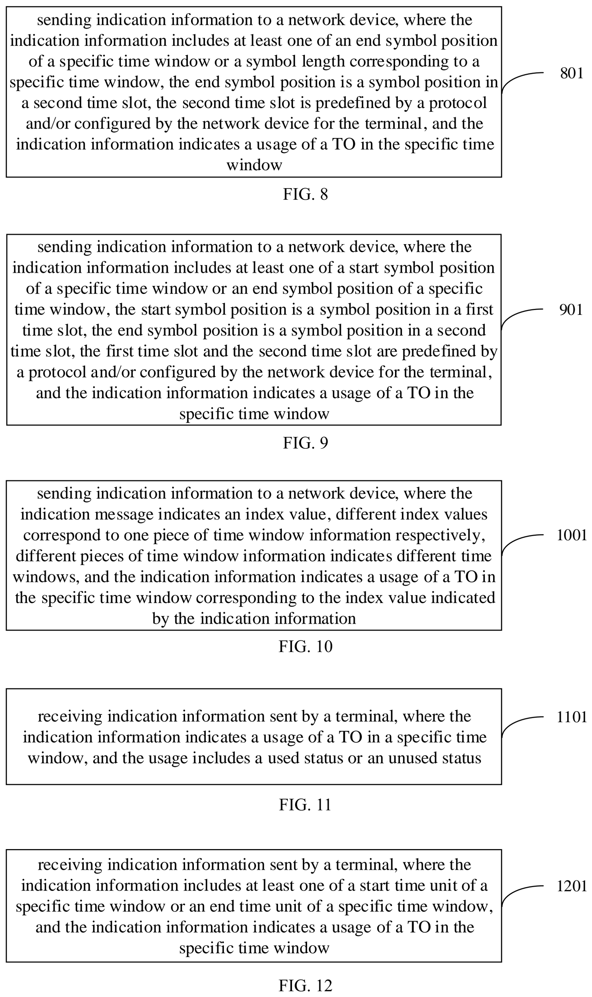

FIG. 8 is a schematic flowchart of an indication method provided in an embodiment of the present disclosure. The method is performed by a terminal. As shown in FIG. 8, the indication method may include the following step.

At step 801, indication information is sent to a network device, where the indication information includes at least one of an end symbol position of a specific time window or a symbol length corresponding to a specific time window, the end symbol position is a symbol position in a second time slot, the second time slot is predefined by a protocol and/or configured by the network device for the terminal, and the indication information indicates a usage of a TO in the specific time window.

In an embodiment of the present disclosure, the terminal may send the indication information to the network device in response to a CG period including multiple TOs.

In an embodiment of the present disclosure, the indication information includes the end symbol position and the symbol length corresponding to the specific time window; or the indication information includes the symbol length corresponding to the specific time window in response to the end symbol position being predefined by a protocol and/or configured by the network device for the terminal; or the indication information includes the end symbol position in response to the symbol length corresponding to the specific time window being predefined by a protocol and/or configured by the network device for the terminal. The above-mentioned specific situation of "the indication information including at least one of the end symbol position of the specific time window or the symbol length corresponding to the specific time window" is similar to the above-mentioned specific situation of "the indication information including at least one of the end time unit of the specific time window or the time length of the specific time window", which will not be repeated here in the present disclosure.

In an embodiment of the present disclosure, the second time slot may be any one of: the second time slot being a time slot where a CG PUSCH carrying the indication information is located; the second time slot being a next time slot of a time slot where a CG PUSCH carrying the indication information is located; the second time slot being a target time slot, where the time interval between the target time slot and a time slot for a CG PUSCH carrying the indication information satisfies a preset duration (for example, the time interval between the end time of the target time slot and the end time of the time slot for the CG PUSCH carrying the indication information satisfies the preset duration); or the second time slot is a time slot determined based on a reference time slot and an offset time slot, where the reference time slot may be, for example, a time slot where a CG PUSCH carrying the indication information is located, and the offset time slot may be predefined by a protocol and/or preconfigured by the network device, for example, if the reference time slot is SLOT1 and the offset time slot is 1 SLOT, then the second time slot may be SLOT2.

In an embodiment of the present disclosure, the above-mentioned end symbol position and the above-mentioned second time slot can be used to determine the end position of the specific time window. For example, the end position of the specific time window can be a position corresponding to the end symbol position in the second time slot. For example, assuming that the second time slot is a next time slot of a time slot where a CG PUSCH carrying the indication information is located, and the end symbol position is the second symbol, then it can be determined that the end position of the specific time window is the second symbol in the next time slot of the time slot where the CG PUSCH carrying the indication information is located. Thereafter, the specific time window can be determined based on the end position of the specific time window and the symbol length corresponding to the specific time window.

It can be seen that by including at least one of the end symbol position of the specific time window or the symbol length corresponding to the specific time window in the indication information, the specific time window can be determined based on the indication information. On this basis, the usage of the TO in the specific time window can be further determined based on the indication meaning of the indication information (that is, whether the indication information indicates a used TO or an unused TO).

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

FIG. 9 is a schematic flowchart of an indication method provided in an embodiment of the present disclosure. The method is performed by a terminal. As shown in FIG. 9, the indication method may include the following step.

At step 901, indication information is sent to a network device, where the indication information includes at least one of a start symbol position of a specific time window or an end symbol position of a specific time window, the start symbol position is a symbol position in a first time slot, the end symbol position is a symbol position in a second time slot, the first time slot and the second time slot are predefined by a protocol and/or configured by the network device for the terminal, and the indication information indicates a usage of a TO in the specific time window.

In an embodiment of the present disclosure, the terminal may send the indication information to the network device in response to a CG period including multiple TOs.

In an embodiment of the present disclosure, the indication information includes the start symbol position and the end symbol position; or the indication information includes the end symbol position in response to the start symbol position being predefined by a protocol and/or configured by the network device for the terminal; or the indication information includes the start symbol position in response to the end symbol position being predefined by a protocol and/or configured by the network device for the terminal. The above-mentioned specific situation of "the indication information including at least one of the start symbol position of the specific time window or the end symbol position of the specific time window" is similar to the above-mentioned specific situation of "the indication information including at least one of the start time unit of the specific time window or the end time unit of the specific time window", which will not be repeated here in the present disclosure.

For the relevant description of the first time slot and the second time slot, reference may be made to the description of the aforementioned embodiments.

By including at least one of the start symbol position of the specific time window or the end symbol position of the specific time window in the indication information, the specific time window can be determined based on the indication information. On this basis, the usage of the TO in the specific time window can be further determined based on the indication meaning of the indication information (that is, whether the indication information indicates a used TO or an unused TO).

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

FIG. 10 is a schematic flowchart of an indication method provided in an embodiment of the present disclosure. The method is performed by a terminal. As shown in FIG. 10, the indication method may include the following step.

At step 1001, indication information is sent to a network device, where the indication message indicates an index value, different index values correspond to one piece of time window information respectively, different pieces of time window information indicates different time windows, and the indication information indicates a usage of a TO in the specific time window corresponding to the index value indicated by the indication information.

In an embodiment of the present disclosure, the terminal may send the indication information to the network device in response to a CG period including multiple TOs.

In an embodiment of the present disclosure, the above-mentioned indication information may include a bit value, which may be a binary number, and the above-mentioned index value may be a binary number or a decimal number. Optionally, the above-mentioned method of indicating the index value by the indication information may include when the index value is a binary number, indicating the index value by making the bit value in the indication information be the above-mentioned index value; and when the index value is a decimal number, indicating the index value by making the bit value in the indication information be the binary number corresponding to the index value.

In an embodiment of the present disclosure, the above-mentioned time window information may include at least one of: a start time slot of a time window, an end time slot of a time window, a time slot length of a time window, a start symbol of a time window, an end symbol of a time window, a symbol length of a time window, a start TO of a time window, an end TO of a time window, a numeric count of TOs included in a time window, a reference time slot corresponding to a time window, an offset time slot corresponding to a time window, a reference symbol corresponding to a time window, an offset symbol corresponding to a time window, a reference TO corresponding to a time window, or an offset TO corresponding to a time window.

It can be seen from the information included in the above-mentioned time window information that the corresponding time window can be determined based on the time window information. Based on this, after the network device receives the indication information, the network device can determine the corresponding time window information based on the index value indicated by the indication information. Thereafter, the corresponding specific time window can be determined based on the time window information, and the usage of the TO in the specific time window can be further determined based on the indication meaning of the indication information (that is, whether the indication information indicates a used TO or an unused TO).

In summary, the indication method provided in the embodiments of the present disclosure can indicate the usage of the TO in the time window via the indication information, thereby ensuring the successful indication of the usage of the TO by the terminal, and further ensuring the successful reuse of the unused TO so as to ensure the uplink transmission efficiency.

FIG. 11 is a schematic flowchart of an indication method provided in an embodiment of the present disclosure. The method is performed by a network device. As shown in FIG. 11, the indication method may include the following step.

At step 1101, indication information sent by a terminal is received, where the indication information indicates a usage of a TO in a specific time window, and the usage includes a used status or an unused status.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1101, reference may be made to the description of the aforementioned embodiments.

In summary, in the indication method provided in the embodiments of the present disclosure, the network device may receive the indication information sent by the terminal, and the indication information indicates the usage of the TO in the specific time window, and the usage includes a used status or an unused status. It can be seen that the present disclosure provides an indication method that can indicate the usage of the TO in the time window via the indication information, thereby ensuring the successful indication of the usage of the TO by the terminal, and further ensuring the successful reuse of the unused TO so as to ensure the uplink transmission efficiency.

FIG. 12 is a schematic flowchart of an indication method provided in an embodiment of the present disclosure. The method is performed by a network device. As shown in FIG. 12, the indication method may include the following step.

At step 1201, indication information sent by a terminal is received, where the indication information includes at least one of a start time unit of a specific time window or an end time unit of a specific time window, and the indication information indicates a usage of a TO in the specific time window.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1201, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

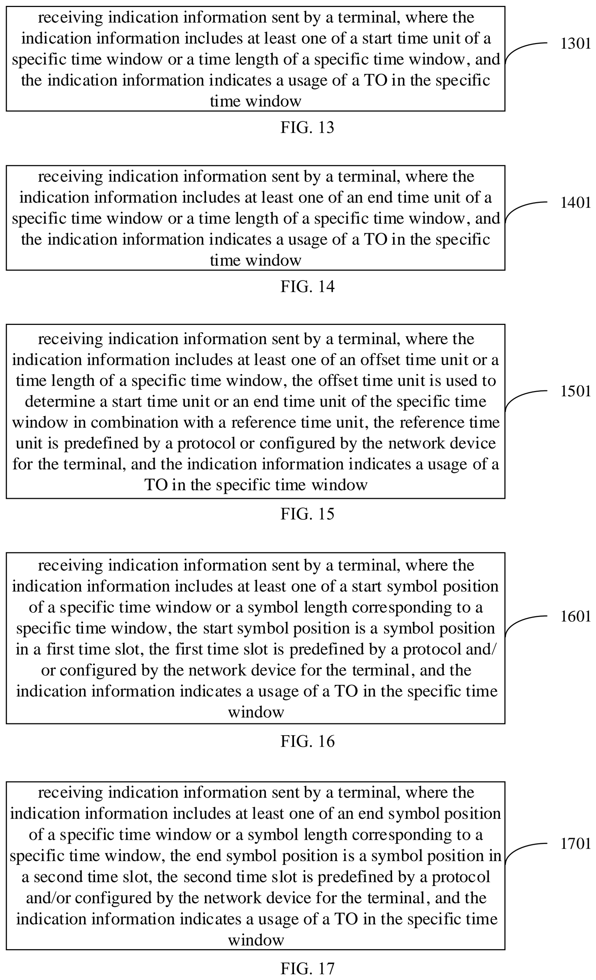

FIG. 13 is a schematic flowchart of an indication method provided in an embodiment of the present disclosure. The method is performed by a network device. As shown in FIG. 13, the indication method may include the following step.

At step 1301, indication information sent by a terminal is received, where the indication information includes at least one of a start time unit of a specific time window or a time length of a specific time window, and the indication information indicates a usage of a TO in the specific time window.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1301, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

FIG. 14 is a schematic flowchart of an indication method provided in an embodiment of the present disclosure. The method is performed by a network device. As shown in FIG. 14, the indication method may include the following step.

At step 1401, indication information sent by a terminal is received, where the indication information includes at least one of an end time unit of a specific time window or a time length of a specific time window, and the indication information indicates a usage of a TO in the specific time window.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1401, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

FIG. 15 is a schematic flowchart of an indication method provided in an embodiment of the present disclosure. The method is performed by a network device. As shown in FIG. 15, the indication method may include the following step.

At step 1501, indication information sent by a terminal is received, where the indication information includes at least one of an offset time unit or a time length of a specific time window, the offset time unit is used to determine a start time unit or an end time unit of the specific time window in combination with a reference time unit, the reference time unit is predefined by a protocol or configured by the network device for the terminal, and the indication information indicates a usage of a TO in the specific time window.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1501, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

FIG. 16 is a schematic flowchart of an indication method provided in an embodiment of the present disclosure. The method is performed by a network device. As shown in FIG. 16, the indication method may include the following step.

At step 1601, indication information sent by a terminal is received, where the indication information includes at least one of a start symbol position of a specific time window or a symbol length corresponding to a specific time window, the start symbol position is a symbol position in a first time slot, the first time slot is predefined by a protocol and/or configured by the network device for the terminal, and the indication information indicates a usage of a TO in the specific time window.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1601, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

FIG. 17 is a schematic flowchart of an indication method provided in an embodiment of the present disclosure. The method is performed by a network device. As shown in FIG. 17, the indication method may include the following step.

At step 1701, indication information sent by a terminal is received, where the indication information includes at least one of an end symbol position of a specific time window or a symbol length corresponding to a specific time window, the end symbol position is a symbol position in a second time slot, the second time slot is predefined by a protocol and/or configured by the network device for the terminal, and the indication information indicates a usage of a TO in the specific time window.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1701, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

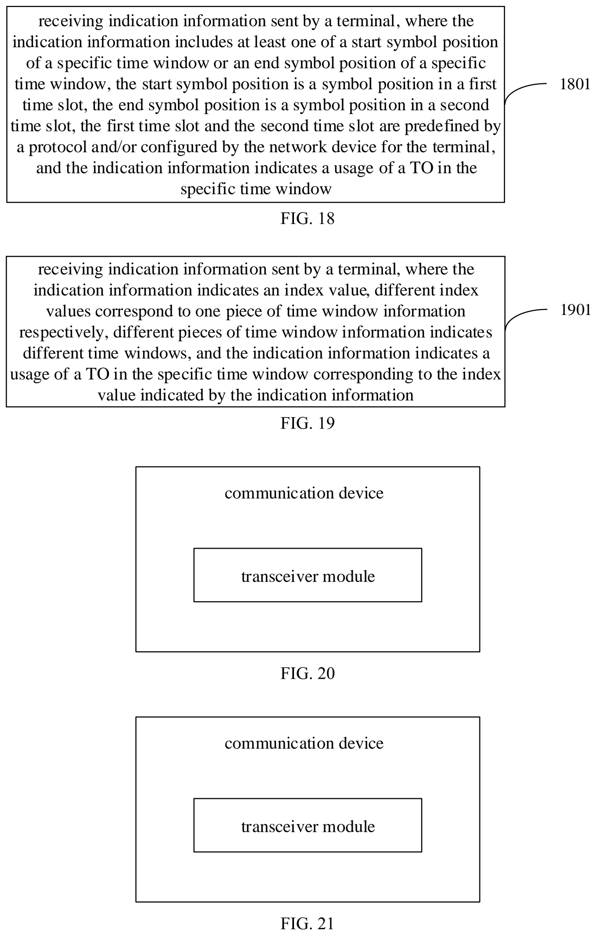

FIG. 18 is a schematic flowchart of an indication method provided in an embodiment of the present disclosure. The method is performed by a network device. As shown in FIG. 18, the indication method may include the following step.

At step 1801, indication information sent by a terminal is received, where the indication information includes at least one of a start symbol position of a specific time window or an end symbol position of a specific time window, the start symbol position is a symbol position in a first time slot, the end symbol position is a symbol position in a second time slot, the first time slot and the second time slot are predefined by a protocol and/or configured by the network device for the terminal, and the indication information indicates a usage of a TO in the specific time window.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1801, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

FIG. 19 is a schematic flowchart of an indication method provided in an embodiment of the present disclosure. The method is performed by a network device. As shown in FIG. 19, the indication method may include the following step.

At step 1901, indication information sent by a terminal is received, where the indication information indicates an index value, different index values correspond to one piece of time window information respectively, different pieces of time window information indicates different time windows, and the indication information indicates a usage of a TO in the specific time window corresponding to the index value indicated by the indication information.

In an embodiment of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. Alternatively, the indication information is sent by the terminal to the network device in response to a CG period including multiple TOs. For the detailed description of step 1901, reference may be made to the description of the aforementioned embodiments.

In summary, in the indication method provided in the embodiments of the present disclosure, an indication method is provided that can indicate the usage of the TO in the time window via the indication information, thereby ensuring the successful indication of the usage of the TO by the terminal, and further ensuring the successful reuse of the unused TO so as to ensure the uplink transmission efficiency.

FIG. 20 is a schematic block diagram of a communication device provided in an embodiment of the present disclosure. As shown in FIG. 20, the communication device may include a transceiver module configured to send indication information to a network device, where the indication information indicates a usage of a TO in a specific time window, and the usage includes a used status or an unused status.

In summary, in the communication device provided in the embodiments of the present disclosure, the terminal sends the indication information to the network device when a CG period includes multiple TOs, where the indication information indicates the usage of the TO in the specific time window, and the usage includes a used status or an unused status. It can be seen that the present disclosure provides an indication method for the terminal to indicate to the network device the usage of the TO in the specific time window, so that after the network device determines based on the indication from the terminal that TOs in the specific time window are not used by the terminal, these unused TOs can be reused for other uplink transmissions, thereby ensuring the uplink transmission efficiency.

Optionally, in an embodiment of the present disclosure, the transceiver module is configured to send the indication information to the network device in response to a CG period including multiple TOs.

Optionally, in an embodiment of the present disclosure, the specific time window is located in a valid time window of the indication information or is equal to a valid time window of the indication information, and the valid time window of the indication information includes a time window composed of all TOs whose usage is capable of being indicated by the indication information.

Optionally, in an embodiment of the present disclosure, the indication information includes at least one of a start time unit of the specific time window or an end time unit of the specific time window, where the indication information includes the start time unit and the end time unit; or the indication information includes the end time unit in response to the start time unit being predefined by a protocol and/or configured by the network device for the terminal; or the indication information includes the start time unit in response to the end time unit being predefined by a protocol and/or configured by the network device for the terminal.

Optionally, in an embodiment of the present disclosure, the indication information includes at least one of a start time unit of the specific time window or a time length of the specific time window, where the indication information includes the start time unit and the time length of the specific time window; or the indication information includes the time length of the specific time window in response to the start time unit being predefined by a protocol and/or configured by the network device for the terminal; or the indication information includes the start time unit in response to the time length of the specific time window being predefined by a protocol and/or configured by the network device for the terminal.

Optionally, in an embodiment of the present disclosure, the indication information includes at least one of an end time unit of the specific time window or a time length of the specific time window, where the indication information includes the end time unit and the time length of the specific time window; or the indication information includes the time length of the specific time window in response to the end time unit being predefined by a protocol and/or configured by the network device for the terminal; or the indication information includes the end time unit in response to the time length of the specific time window being predefined by a protocol and/or configured by the network device for the terminal.

Optionally, in an embodiment of the present disclosure, the indication information includes at least one of an offset time unit or a time length of the specific time window, the offset time unit is used to determine a start time unit or an end time unit of the specific time window in combination with a reference time unit, and the reference time unit is predefined by a protocol or configured by the network device for the terminal, where the indication information includes the offset time unit and the time length of the specific time window; or the indication information includes the time length of the specific time window in response to the offset time unit being predefined by a protocol and/or configured by the network device for the terminal; or the indication information includes the offset time unit in response to the time length of the specific time window being predefined by a protocol and/or configured by the network device for the terminal.

Optionally, in an embodiment of the present disclosure, the time unit includes at least one of: a time slot, a TO, or a radio subframe.

Optionally, in an embodiment of the present disclosure, the indication information includes at least one of a start symbol position of the specific time window or a symbol length corresponding to the specific time window, the start symbol position is a symbol position in a first time slot, and the first time slot is predefined by a protocol and/or configured by the network device for the terminal, where the indication information includes the start symbol position and the symbol length corresponding to the specific time window; or the indication information includes the symbol length corresponding to the specific time window in response to the start symbol position being predefined by a protocol and/or configured by the network device for the terminal; or the indication information includes the start symbol position in response to the symbol length corresponding to the specific time window being predefined by a protocol and/or configured by the network device for the terminal.

Optionally, in an embodiment of the present disclosure, the indication information includes at least one of an end symbol position of the specific time window or a symbol length corresponding to the specific time window, the end symbol position is a symbol position in a second time slot, and the second time slot is predefined by a protocol and/or configured by the network device for the terminal, where the indication information includes the end symbol position and the symbol length corresponding to the specific time window; or the indication information includes the symbol length corresponding to the specific time window in response to the end symbol position being predefined by a protocol and/or configured by the network device for the terminal; or the indication information includes the end symbol position in response to the symbol length corresponding to the specific time window being predefined by a protocol and/or configured by the network device for the terminal.

Optionally, in an embodiment of the present disclosure, the indication information includes at least one of a start symbol position of the specific time window or an end symbol position of the specific time window, the start symbol position is a symbol position in a first time slot, the end symbol position is a symbol position in a second time slot, and the first time slot and the second time slot are predefined by a protocol and/or configured by the network device for the terminal, where the indication information includes the start symbol position and the end symbol position; or the indication information includes the end symbol position in response to the start symbol position being predefined by a protocol and/or configured by the network device for the terminal; or the indication information includes the start symbol position in response to the end symbol position being predefined by a protocol and/or configured by the network device for the terminal.

Optionally, in an embodiment of the present disclosure, the indication information indicates an index value, different index values correspond to time window information respectively, different time window information indicates different time windows, and the indication information indicates the usage of the TO in the specific time window corresponding to the index value indicated by the indication information.

Optionally, in an embodiment of the present disclosure, the time window information includes at least one of: a start time slot of a time window, an end time slot of a time window, a time slot length of a time window, a start symbol of a time window, an end symbol of a time window, a symbol length of a time window, a start TO of a time window, an end TO of a time window, a numeric count of TOs included in a time window, a reference time slot corresponding to a time window, an offset time slot corresponding to a time window, a reference symbol corresponding to a time window, an offset symbol corresponding to a time window, a reference TO corresponding to a time window, or an offset TO corresponding to a time window.

Optionally, in an embodiment of the present disclosure, the indication information is sent to the network device in any one or several TOs via a UCI signaling.

FIG. 21 is a schematic block diagram of a communication device provided in an embodiment of the present disclosure. As shown in FIG. 21, the communication device may include a transceiver module configured to receive indication information sent by a terminal, where the indication information indicates a usage of a TO in a specific time window, and the usage includes a used status or an unused status.

In summary, in the communication device provided in the embodiments of the present disclosure, the network device receives the indication information sent by the terminal, where the indication information is sent by the terminal to the network device when a CG period includes multiple TOs, the indication information indicates the usage of the TO in the specific time window, and the usage includes a used status or an unused status. It can be seen that the present disclosure provides an indication method for the terminal to indicate to the network device the usage of the TO in the specific time window, so that after the network device determines based on the indication from the terminal that TOs in the specific time window are not used by the terminal, these unused TOs can be reused for other uplink transmissions, thereby ensuring the uplink transmission efficiency.

Optionally, in an embodiment of the present disclosure, the indication information is sent by the terminal to the network device in a case of a CG period including multiple TOs.

Optionally, in an embodiment of the present disclosure, the specific time window is located in a valid time window of the indication information or is equal to a valid time window of the indication information, and the valid time window of the indication information includes a time window composed of all TOs whose usage is capable of being indicated by the indication information.

Optionally, in an embodiment of the present disclosure, the indication information includes at least one of a start time unit of the specific time window or an end time unit of the specific time window, where the indication information includes the start time unit and the end time unit; or the indication information includes the end time unit in response to the start time unit being predefined by a protocol and/or configured by the network device for the terminal; or the indication information includes the start time unit in response to the end time unit being predefined by a protocol and/or configured by the network device for the terminal.

Optionally, in an embodiment of the present disclosure, the indication information includes at least one of a start time unit of the specific time window or a time length of the specific time window, where the indication information includes the start time unit and the time length of the specific time window; or the indication information includes the time length of the specific time window in response to the start time unit being predefined by a protocol and/or configured by the network device for the terminal; or the indication information includes the start time unit in response to the time length of the specific time window being predefined by a protocol and/or configured by the network device for the terminal.

Optionally, in an embodiment of the present disclosure, the indication information includes at least one of an end time unit of the specific time window or a time length of the specific time window, where the indication information includes the end time unit and the time length of the specific time window; or the indication information includes the time length of the specific time window in response to the end time unit being predefined by a protocol and/or configured by the network device for the terminal; or the indication information includes the end time unit in response to the time length of the specific time window being predefined by a protocol and/or configured by the network device for the terminal.

Optionally, in an embodiment of the present disclosure, the indication information includes at least one of an offset time unit or a time length of the specific time window, the offset time unit is used to determine a start time unit or an end time unit of the specific time window in combination with a reference time unit, and the reference time unit is predefined by a protocol or configured by the network device for the terminal, where the indication information includes the offset time unit and the time length of the specific time window; or the indication information includes the time length of the specific time window in response to the offset time unit being predefined by a protocol and/or configured by the network device for the terminal; or the indication information includes the offset time unit in response to the time length of the specific time window being predefined by a protocol and/or configured by the network device for the terminal.

Optionally, in an embodiment of the present disclosure, the time unit includes at least one of: a time slot, a TO, or a radio subframe.

Optionally, in an embodiment of the present disclosure, the indication information includes at least one of a start symbol position of the specific time window or a symbol length corresponding to the specific time window, the start symbol position is a symbol position in a first time slot, and the first time slot is predefined by a protocol and/or configured by the network device for the terminal, where the indication information includes the start symbol position and the symbol length corresponding to the specific time window; or the indication information includes the symbol length corresponding to the specific time window in response to the start symbol position being predefined by a protocol and/or configured by the network device for the terminal; or the indication information includes the start symbol position in response to the symbol length corresponding to the specific time window being predefined by a protocol and/or configured by the network device for the terminal.

Optionally, in an embodiment of the present disclosure, the indication information includes at least one of an end symbol position of the specific time window or a symbol length corresponding to the specific time window, the end symbol position is a symbol position in a second time slot, and the second time slot is predefined by a protocol and/or configured by the network device for the terminal, where the indication information includes the end symbol position and the symbol length corresponding to the specific time window; or the indication information includes the symbol length corresponding to the specific time window in response to the end symbol position being predefined by a protocol and/or configured by the network device for the terminal; or the indication information includes the end symbol position in response to the symbol length corresponding to the specific time window being predefined by a protocol and/or configured by the network device for the terminal.

Optionally, in an embodiment of the present disclosure, the indication information includes at least one of a start symbol position of the specific time window or an end symbol position of the specific time window, the start symbol position is a symbol position in a first time slot, the end symbol position is a symbol position in a second time slot, and the first time slot and the second time slot are predefined by a protocol and/or configured by the network device for the terminal, where the indication information includes the start symbol position and the end symbol position; or the indication information includes the end symbol position in response to the start symbol position being predefined by a protocol and/or configured by the network device for the terminal; or the indication information includes the start symbol position in response to the end symbol position being predefined by a protocol and/or configured by the network device for the terminal.

Optionally, in an embodiment of the present disclosure, the indication information indicates an index value, different index values correspond to time window information respectively, different time window information indicates different time windows, and the indication information indicates the usage of the TO in the specific time window corresponding to the index value indicated by the indication information.

Optionally, in an embodiment of the present disclosure, the time window information includes at least one of: a start time slot of a time window, an end time slot of a time window, a time slot length of a time window, a start symbol of a time window, an end symbol of a time window, a symbol length of a time window, a start TO of a time window, an end TO of a time window, a numeric count of TOs included in a time window, a reference time slot corresponding to a time window, an offset time slot corresponding to a time window, a reference symbol corresponding to a time window, an offset symbol corresponding to a time window, a reference TO corresponding to a time window, or an offset TO corresponding to a time window.

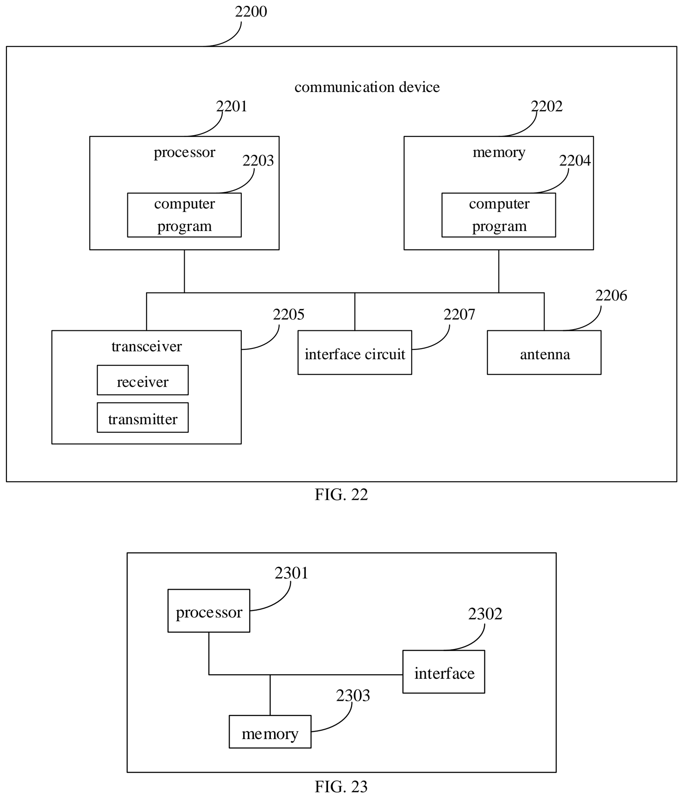

Reference is made to FIG. 22, which is a schematic block diagram of a communication device 2200 provided in an embodiment of the present disclosure. The communication device 2200 may be a base station or a terminal, or may be a chip, a chip system, a processor or the like supporting a base station or a terminal to implement the above-mentioned methods. The communication device 2200 may be configured to implement the methods as described in the above-mentioned method embodiments. For details, reference may be made to the description in the above-mentioned method embodiments.

The communication device 2200 may include one or more processors 2201. The processor 2201 may be a general-purpose processor, a special-purpose processor, or the like. The processor 2201 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a computer program, and process data of the computer program.

Optionally, the communication device 2200 may further include one or more memories 2202 on which a computer program 2204 may be stored, and the processor 2201 is configured to execute the computer program 2204 to cause the communication device 2200 to perform the methods as described in the above-mentioned method embodiments. Optionally, the memory 2202 may also have data stored therein. The communication device 2200 and the memory 2202 may be provided independently or integrated together.

Optionally, the communication device 2200 may further include a transceiver 2205 and an antenna 2206. The transceiver 2205 may be referred to as a transceiving unit, a transceiving device, a transceiving circuit or the like for implementing a transceiving function. The transceiver 2205 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 2200 may further include one or more interface circuits 2207. The interface circuit 2207 is configured to receive and transmit code instructions to the processor 2201. The processor 2201 is configured to run the code instructions to enable the communication device 2200 to perform the methods described in the above-mentioned method embodiments.

In an implementation, the processor 2201 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 2201 may have stored therein the computer program 2203 that, when running on the processor 2201, enables the communication device 2200 to perform the methods described in the above-mentioned method embodiments. The computer program 2203 may be embedded in the processor 2201, in which case the processor 2201 may be implemented by hardware.

In an implementation, the communication device 2200 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, or the like. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), or the like.

The communication device described in the above embodiments may be the base station or the terminal, but the scope of the communication device described in the present disclosure is not limited thereto. The structure of the communication device may not be limited by FIG. 22. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a base station, a cloud device, an artificial intelligence device, or the like; or (6) others.

For the case where the communication device may be a chip or a chip system, reference may be made to the schematic block diagram of the chip shown in FIG. 23. The chip shown in FIG. 23 includes a processor 2301 and an interface 2302. The number of the processors 2301 may be one or more, and the number of the interfaces 2302 may be multiple.

Optionally, the chip further includes a memory 2303 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art may understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first", "second", "third", "A", "B", "C", "D", and the like, and these technical features described with the terms "first", "second", "third", "A", "B", "C" and "D" have no order of precedence or size.

The corresponding relationships shown in tables in the present disclosure may be configured or predefined. The values of information in each table are only given by way of example and may be configured as other values, which are not limited in the present disclosure. When configuring the corresponding relationship between the information and each parameter, it is not necessarily required to configure all the corresponding relationships illustrated in each table. For example, in the tables in the present disclosure, the corresponding relationships shown in some rows may not be configured. For another example, appropriate adjustments may be made based on the above tables, such as splitting, merging, or the like. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. An indication method, performed by a terminal, the method comprising:
sending indication information to a network device, wherein the indication information indicates a usage of a transmission occasion (TO) in a specific time window, and the usage comprises a used status or an unused status.

2. The method according to claim 1, wherein sending the indication information to the network device comprises:
sending the indication information to the network device in response to a configured grant (CG) period comprising multiple TOs.

3. The method according to claim 1, wherein the specific time window is located in a valid time window of the indication information or is equal to a valid time window of the indication information, and the valid time window of the indication information comprises a time window composed of all TOs whose usage is capable of being indicated by the indication information.

4. The method according to any one of claims 1 to 3, wherein the indication information comprises at least one of a start time unit of the specific time window or an end time unit of the specific time window,
wherein the indication information comprises the start time unit and the end time unit; or
the indication information comprises the end time unit in response to the start time unit being predefined by a protocol and/or configured by the network device for the terminal; or
the indication information comprises the start time unit in response to the end time unit being predefined by a protocol and/or configured by the network device for the terminal.

5. The method according to any one of claims 1 to 3, wherein the indication information comprises at least one of a start time unit of the specific time window or a time length of the specific time window,
wherein the indication information comprises the start time unit and the time length of the specific time window; or
the indication information comprises the time length of the specific time window in response to the start time unit being predefined by a protocol and/or configured by the network device for the terminal; or
the indication information comprises the start time unit in response to the time length of the specific time window being predefined by a protocol and/or configured by the network device for the terminal.

6. The method according to any one of claims 1 to 3, wherein the indication information comprises at least one of an end time unit of the specific time window or a time length of the specific time window,
wherein the indication information comprises the end time unit and the time length of the specific time window; or
the indication information comprises the time length of the specific time window in response to the end time unit being predefined by a protocol and/or configured by the network device for the terminal; or
the indication information comprises the end time unit in response to the time length of the specific time window being predefined by a protocol and/or configured by the network device for the terminal.

7. The method according to any one of claims 1 to 3, wherein the indication information comprises at least one of an offset time unit or a time length of the specific time window, the offset time unit is used to determine a start time unit or an end time unit of the specific time window in combination with a reference time unit, and the reference time unit is predefined by a protocol or configured by the network device for the terminal,
wherein the indication information comprises the offset time unit and the time length of the specific time window; or
the indication information comprises the time length of the specific time window in response to the offset time unit being predefined by a protocol and/or configured by the network device for the terminal; or
the indication information comprises the offset time unit in response to the time length of the specific time window being predefined by a protocol and/or configured by the network device for the terminal.

8. The method according to any one of claims 3 to 7, wherein the time unit comprises at least one of:
a time slot;
a TO; or
a radio subframe.

9. The method according to any one of claims 1 to 3, wherein the indication information comprises at least one of a start symbol position of the specific time window or a symbol length corresponding to the specific time window, the start symbol position is a symbol position in a first time slot, and the first time slot is predefined by a protocol and/or configured by the network device for the terminal,
wherein the indication information comprises the start symbol position and the symbol length corresponding to the specific time window; or
the indication information comprises the symbol length corresponding to the specific time window in response to the start symbol position being predefined by a protocol and/or configured by the network device for the terminal; or
the indication information comprises the start symbol position in response to the symbol length corresponding to the specific time window being predefined by a protocol and/or configured by the network device for the terminal.

10. The method according to any one of claims 1 to 3, wherein the indication information comprises at least one of an end symbol position of the specific time window or a symbol length corresponding to the specific time window, the end symbol position is a symbol position in a second time slot, and the second time slot is predefined by a protocol and/or configured by the network device for the terminal,
wherein the indication information comprises the end symbol position and the symbol length corresponding to the specific time window; or
the indication information comprises the symbol length corresponding to the specific time window in response to the end symbol position being predefined by a protocol and/or configured by the network device for the terminal; or
the indication information comprises the end symbol position in response to the symbol length corresponding to the specific time window being predefined by a protocol and/or configured by the network device for the terminal.

11. The method according to any one of claims 1 to 3, wherein the indication information comprises at least one of a start symbol position of the specific time window or an end symbol position of the specific time window, the start symbol position is a symbol position in a first time slot, the end symbol position is a symbol position in a second time slot, and the first time slot and the second time slot are predefined by a protocol and/or configured by the network device for the terminal,
wherein the indication information comprises the start symbol position and the end symbol position; or
the indication information comprises the end symbol position in response to the start symbol position being predefined by a protocol and/or configured by the network device for the terminal; or
the indication information comprises the start symbol position in response to the end symbol position being predefined by a protocol and/or configured by the network device for the terminal.

12. The method according to any one of claims 1 to 3, wherein the indication information indicates an index value, different index values correspond to time window information respectively, different time window information indicates different time windows, and the indication information indicates the usage of the TO in the specific time window corresponding to the index value indicated by the indication information.

13. The method according to claim 12, wherein the time window information comprises at least one of:
a start time slot of a time window;
an end time slot of a time window;
a time slot length of a time window;
a start symbol of a time window;
an end symbol of a time window;
a symbol length of a time window;
a start TO of a time window;
an end TO of a time window;
a numeric count of TOs comprised in a time window;
a reference time slot corresponding to a time window;
an offset time slot corresponding to a time window;
a reference symbol corresponding to a time window;
an offset symbol corresponding to a time window;
a reference TO corresponding to a time window; or
an offset TO corresponding to a time window.

14. The method according to any one of claims 1 to 13, wherein the indication information is sent to the network device in any one or several TOs via an uplink control information (UCI) signaling.

15. An indication method, performed by a network device, the method comprising:
receiving indication information sent by a terminal, wherein the indication information indicates a usage of a transmission occasion (TO) in a specific time window, and the usage comprises a used status or an unused status.

16. The method according to claim 15, wherein the indication information is sent by the terminal to the network device in a case of a configured grant (CG) period comprising multiple TOs.

17. The method according to claim 15, wherein the specific time window is located in a valid time window of the indication information or is equal to a valid time window of the indication information, and the valid time window of the indication information comprises a time window composed of all TOs whose usage is capable of being indicated by the indication information.

18. The method according to any one of claims 15 to 17, wherein the indication information comprises at least one of a start time unit of the specific time window or an end time unit of the specific time window,
wherein the indication information comprises the start time unit and the end time unit; or
the indication information comprises the end time unit in response to the start time unit being predefined by a protocol and/or configured by the network device for the terminal; or
the indication information comprises the start time unit in response to the end time unit being predefined by a protocol and/or configured by the network device for the terminal.

19. The method according to any one of claims 15 to 17, wherein the indication information comprises at least one of a start time unit of the specific time window or a time length of the specific time window,
wherein the indication information comprises the start time unit and the time length of the specific time window; or
the indication information comprises the time length of the specific time window in response to the start time unit being predefined by a protocol and/or configured by the network device for the terminal; or
the indication information comprises the start time unit in response to the time length of the specific time window being predefined by a protocol and/or configured by the network device for the terminal.

20. The method according to any one of claims 15 to 17, wherein the indication information comprises at least one of an end time unit of the specific time window or a time length of the specific time window,
wherein the indication information comprises the end time unit and the time length of the specific time window; or
the indication information comprises the time length of the specific time window in response to the end time unit being predefined by a protocol and/or configured by the network device for the terminal; or
the indication information comprises the end time unit in response to the time length of the specific time window being predefined by a protocol and/or configured by the network device for the terminal.

21. The method according to any one of claims 15 to 17, wherein the indication information comprises at least one of an offset time unit or a time length of the specific time window, the offset time unit is used to determine a start time unit or an end time unit of the specific time window in combination with a reference time unit, and the reference time unit is predefined by a protocol or configured by the network device for the terminal,
wherein the indication information comprises the offset time unit and the time length of the specific time window; or
the indication information comprises the time length of the specific time window in response to the offset time unit being predefined by a protocol and/or configured by the network device for the terminal; or
the indication information comprises the offset time unit in response to the time length of the specific time window being predefined by a protocol and/or configured by the network device for the terminal.

22. The method according to any one of claims 17 to 21, wherein the time unit comprises at least one of:
a time slot;
a TO; or
a radio subframe.

23. The method according to any one of claims 15 to 17, wherein the indication information comprises at least one of a start symbol position of the specific time window or a symbol length corresponding to the specific time window, the start symbol position is a symbol position in a first time slot, and the first time slot is predefined by a protocol and/or configured by the network device for the terminal,
wherein the indication information comprises the start symbol position and the symbol length corresponding to the specific time window; or
the indication information comprises the symbol length corresponding to the specific time window in response to the start symbol position being predefined by a protocol and/or configured by the network device for the terminal; or
the indication information comprises the start symbol position in response to the symbol length corresponding to the specific time window being predefined by a protocol and/or configured by the network device for the terminal.

24. The method according to any one of claims 15 to 17, wherein the indication information comprises at least one of an end symbol position of the specific time window or a symbol length corresponding to the specific time window, the end symbol position is a symbol position in a second time slot, and the second time slot is predefined by a protocol and/or configured by the network device for the terminal,
wherein the indication information comprises the end symbol position and the symbol length corresponding to the specific time window; or
the indication information comprises the symbol length corresponding to the specific time window in response to the end symbol position being predefined by a protocol and/or configured by the network device for the terminal; or
the indication information comprises the end symbol position in response to the symbol length corresponding to the specific time window being predefined by a protocol and/or configured by the network device for the terminal.

25. The method according to any one of claims 15 to 17, wherein the indication information comprises at least one of a start symbol position of the specific time window or an end symbol position of the specific time window, the start symbol position is a symbol position in a first time slot, the end symbol position is a symbol position in a second time slot, and the first time slot and the second time slot are predefined by a protocol and/or configured by the network device for the terminal,
wherein the indication information comprises the start symbol position and the end symbol position; or
the indication information comprises the end symbol position in response to the start symbol position being predefined by a protocol and/or configured by the network device for the terminal; or
the indication information comprises the start symbol position in response to the end symbol position being predefined by a protocol and/or configured by the network device for the terminal.

26. The method according to any one of claims 15 to 17, wherein the indication information indicates an index value, different index values correspond to time window information respectively, different time window information indicates different time windows, and the indication information indicates the usage of the TO in the specific time window corresponding to the index value indicated by the indication information.

27. The method according to claim 26, wherein the time window information comprises at least one of:
a start time slot of a time window;
an end time slot of a time window;
a time slot length of a time window;
a start symbol of a time window;
an end symbol of a time window;
a symbol length of a time window;
a start TO of a time window;
an end TO of a time window;
a numeric count of TOs comprised in a time window;
a reference time slot corresponding to a time window;
an offset time slot corresponding to a time window;
a reference symbol corresponding to a time window;
an offset symbol corresponding to a time window;
a reference TO corresponding to a time window; or
an offset TO corresponding to a time window.

28. A communication device, comprising:
a transceiver module configured to send indication information to a network device, wherein the indication information indicates a usage of a transmission occasion (TO) in a specific time window, and the usage comprises a used status or an unused status.

29. A communication device, comprising:
a transceiver module configured to receive indication information sent by a terminal, wherein the indication information indicates a usage of a transmission occasion (TO) in a specific time window, and the usage comprises a used status or an unused status.

30. A communication device, comprising:
a processor; and
a memory having stored therein a computer program,
wherein the processor executes the computer program stored in the memory to cause the communication device to perform the method according to any one of claims 1 to 14 or any one of claims 15 to 27.

31. A communication device, comprising:
a processor; and
an interface circuit configured to receive code instructions and transmit the code instructions to the processor,
wherein the processor is configured to run the code instructions to cause the communication device to perform the method according to any one of claims 1 to 14 or any one of claims 15 to 27.

32. A computer-readable storage medium for storing instructions that, when executed, cause the method according to any one of claims 1 to 14 or any one of claims 15 to 27 to be implemented.
